Europäisches Patentamt

European Patent Office

Office européen des brevets

(11) Veröffentlichungsnummer: **0 289 980**
**A2**

## (12) EUROPÄISCHE PATENTANMELDUNG

(21) Anmeldenummer: 88107033.8

(22) Anmeldetag: 02.05.88

(51) Int. Cl.⁴: **F04D 7/02** , **F04D 29/04** , **F04D 13/08**

(30) Priorität: 07.05.87 DE 3715216

(43) Veröffentlichungstag der Anmeldung:
09.11.88 Patentblatt 88/45

(84) Benannte Vertragsstaaten:
BE CH DE FR GB LI NL SE

(71) Anmelder: **Doll, Robert, Dr.-Ing.**
**St. Benediktstrasse 1**
**D-8044 Unterschleissheim(DE)**

Anmelder: **Wiedemann, Werner, Prof. Dr.-Ing.**
**Walter-Meissner-Strasse 8**
**D-8046 Garching(DE)**

Anmelder: **Berndt, Hartmut, Dr.**
**Königsteinstrasse 11**
**D-8000 München 40(DE)**

(72) Erfinder: **Doll, Robert, Dr.-Ing.**
**St. Benediktstrasse 1**
**D-8044 Unterschleissheim(DE)**
Erfinder: **Wiedemann, Werner, Prof. Dr.-Ing.**
**Walter-Meissner-Strasse 8**
**D-8046 Garching(DE)**
Erfinder: **Berndt, Hartmut, Dr.**
**Königsteinstrasse 11**
**D-8000 München 40(DE)**

(74) Vertreter: **Eder, Eugen, Dipl.-Ing. et al**
**Patentanwälte Dipl.-Ing. E. Eder Dipl.-Ing. K.**
**Schieschke Elisabethstrasse 34**
**D-8000 München 40(DE)**

(54) Tauchpumpe, insbesondere für tiefsiedende Flüssigkeiten.

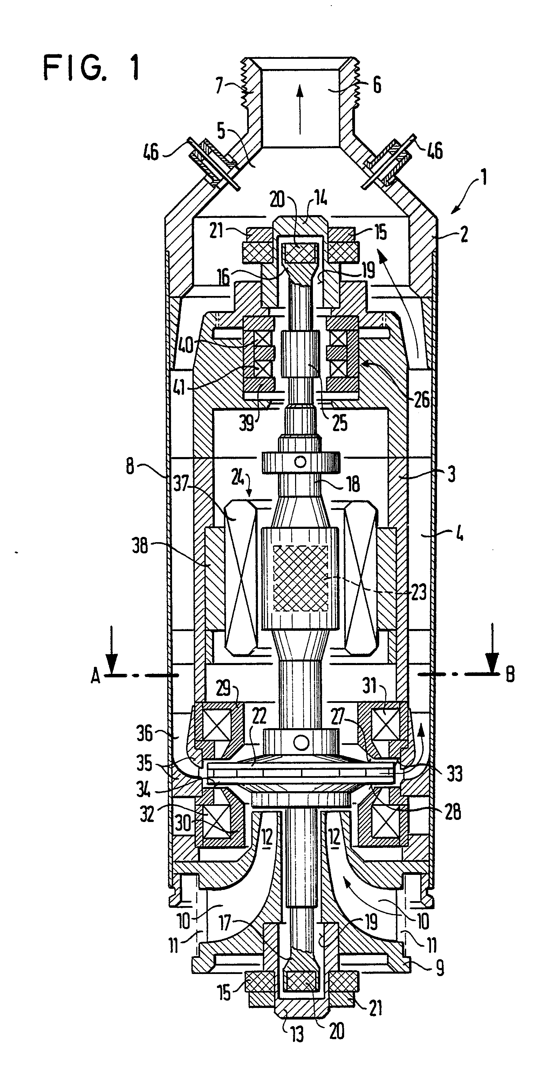

(57) Die Tauchpumpe, insbesondere für tiefsiedende Flüssigkeiten, besitzt eine Lagerung für die das Schaufelrad (22) einer Kreiselpumpe tragende Welle (18). Dem Schaufelrad aus ferromagnetischem Material ist wenigstens ein axial unterstützend wirkender steuerbarer Elektromagnet (29) zugeordnet. Hauptzeichnung ist Fig. 1

FIG. 1

## Tauchpumpe, insbesondere für tiefsiedende Flüssigkeiten

Die Erfindung betrift eine Tauchpumpe, insbesondere für tiefsiedende Flüssigkeiten mit den Merkmalen des Oberbegriffs des Patentanspruchs 1.

Zum wirtschaftlichen Abfüllen von tiefsiedenden Flüssigkeiten, z. B. flüssigem Helium oder flüssigem Wasserstoff, aus einem größeren Vorratstank in kleinere Transportgefäße ist es erforderlich, den durch die einfließende Flüssigkeit aus dem Transportgefäß verdrängten kalten Dampf in den Vorratstank zurückzuleiten. Dies erfordert den Einsatz einer Pumpe, die die Flüssigkeit mit erhöhtem Druck über eine Transferleitung in das Transportgefäß fördert, damit in einer zweiten Transferleitung der verdrängte kalte Dampf in den Vorratstank zurückfließen kann.

Die Flüssigkeit im Vorratstank steht mit ihrem Dampf im Gleichgewicht. Das bedeutet, daß eine Förderpumpe für den angegebenen Zweck keine Saughöhe haben kann. Sie muß zumindest in die Flüssigkeit eintauchen, zweckmäßigerweise wird man sie möglichst tief im Tank einbauen.

Da im allgemeinen in einem Tank für tiefsiedende Flüssigkeiten für den Einbau einer Pumpe keine großen Öffnungen zur Verfügung stehen, ist man auf kleine Abmessungen der Pumpe bei großer Förderleistung angewiesen. Außerdem muß wegen des relativ umständlichen Einbaus in einen Vorratstank ein mög lichst unbegrenzter, wartungsfreier Dauerbetrieb der Pumpe angestrebt werden.

Die Verluste einer solchen Pumpe müssen möglichst niedrig gehalten werden, da die Verdampfungswärmen der tiefsiedenden Flüssigkeiten, insbesondere von Helium, klein sind und jede Art von Wärmeerzeugung zu merklicher Dampfbildung und zu Flüssigkeitsverlusten führt. Das Auftreten von Dampfblasen im Förderstrom setzt außerdem die Druckerzeugung und die Flüssigkeitsförderung in der Pumpe herab und muß deshalb vermieden, d.h. eine möglichst gute Einphasenströmung angestrebt werden. Dies macht eine besondere Art der Abdichtung von Ein-und Austritt am Pumpenschaufelrad und eine besondere Art der Dampfführung erforderlich.

Es ist eine Kreiselpumpe für flüssiges Helium aus einem Final Report des US-Department of Commerce, im Juli 1975, "Performance Characterics of a Liquid Helium Pump" bekannt geworden, bei der ein fliegend angeordnetes einseitig offenes Schaufelrad verwendet wird, das mit dem Rotor eines Induktionsmotors auf gemeinsamer Welle sitzt. Die Welle ist mit Kugellagern gelagert, die, wie der gesamte Rotor, in flüssigem Helium laufen. Nach bisher vorliegenden Erfahrungen sind Kugellager bei tiefen Temperaturen, insbesondere bei Temperaturen des flüssigen Heliums oder flüssigen Wasserstoffs nur brauchbar, wenn Spezialausführungen mit Kugelkäfigen aus besonderen selbstschmierenden Materialien verwendet werden. Die damit erzielten Laufzeiten sind aber bei rasch laufenden Maschinen bei weitem nicht vergleichbar mit denen, die bei Raumtemperatur erzielt werden können. Außerdem liegen die Reibungsverluste bei tiefen Temperaturen beträchtlich höher als bei Kugellagern, die bei Raumtemperatur mit normaler Schmierung betrieben werden. Mit einer solchen bekannten Kreiselpumpe kann die Forderung nach unbegrenztem wartungsfreiem Dauerbetrieb nicht erfüllt werden.

In der DE-PS 21 37 850 ist eine magnetische Lagerung einer rasch laufenden Welle eines Turbinenrotors beschrieben. Hier sind gesonderte Mittel für die radiale Zentrierung und die axiale Positionierung des Rotors vorgesehen. Die Zentrierung erfolgt über ringförmige Schneidenpolschuhe, die an den beiden Wellenenden zusammen mit permanenten Magnetsystemen angeordnet sind. Die axiale Lagerung der Welle erfolgt über aktive, gesteuerte Magnetsysteme, die an gesonderten, - scheibenförmigen, auf der Welle angeordneten Polschuhen angreifen. Das für die Steuerung der Axialmagnete erforderliche Signal wird durch optische Abtastung der Wellenposition erhalten. Die Signale werden elektronisch verarbeitet den Axialmagnetsystemen zuführt, so daß an der Welle eine axiale Rückstellkraft mit Dämpfung entsteht, mit der man die negativen axialen Rückstellkräfte der Zentriersysteme überkompensieren kann. Die Abtastung erfolgt an einer einzigen Stelle an den ringförmigen Schneidenpolschuhen eines der beiden Wellenenden. Da eine derartige optische Abtastung auch bei Querbewegungen der Welle Signale erzeugen kann, ist sie grundsätzlich auch geeignet zur Bekämpfung von parasitären Bewegungsformen des Rotors, wie Präzession, Nutation und Rollbewegung. Hierzu müssen allerdings die den - scheibenförmigen Polschuhen auf der Welle gegenüberstehenden Polschuhe der Axialmagnetsysteme eine leichte Schrägstellung erhalten. Für den Einsatz bei einer Tauchpumpe ist eine solche magnetische Lagerung nicht brauchbar, da beim Eintauchen in die Flüssigkeit diese nicht von der Stelle der optischen Abtastung ferngehalten werden kann und Störungen durch Blasenbildung und evtl. auch durch zeitweise Ablagerung von Verunreinigungen nicht zu vermeiden sind.

Der Erfindung liegt die Aufgabe zugrunde, eine Tauchpumpe, insbesondere für tiefsiedende Flüssigkeiten, zu schaffen, deren Lagerung und Aufbau einen wartungsfreien und störungsfreien Dauerbetrieb bei gutem Wirkungsgrad und einphasiger Förderung ermöglicht, wobei zugleich die Baugröße verhältnismäßig klein gehalten werden soll.

Die Erfindung löst diese Aufgabe mit den die Erfindung kennzeichnenden Merkmalen nach dem Patentanspruch 1.

Die Erfindung bietet durch die Verwendung einer magnetischen Lagerung in Verbindung mit dem Schaufelrad einen wartungsfreien, störungsfreien Dauerbetrieb. Da das Schaufelrad selbst mit in die magnetische Lagerung mit einbezogen ist, ergibt sich zudem ein vereinfachter Aufbau. Außerdem ist eine gute Abdichtung des Schaufelrades gegenüber Ein-und Austritt möglich. So können z.B. die ebenen Flächen an der Ober-bzw. Unterseite eines geschlossenen Pumpenschaufelrades direkt als Polflächen für die Axialmagnetsysteme dienen. Die engen Spalte zwischen den Polflächen und den abdeckenden Schaufelradscheiben bewirken gleichzeitig die Abdichtung von Laufradein-und austritt. Da die erreichbare axiale Lagegenauigkeit des Rotors bei gesteuertem Axialmagnetsystem sehr hoch ist, können ohne Schwierigkeiten sehr enge Drosselspalte eingehalten werden, z.B. einige 0,01 mm bis 0,1 mm. Die Anforderungen an die Laufgenauigkeit in radialer Richtung können dann relativ niedrig sein.

Weitere Ausgestaltungen der Erfindung ergeben sich aus den Unteransprüchen.

Die Erfindung wird nachfolgend anhand eines in der Zeichnung dargestellten Ausführungsbeipieles näher erläutert. In der Zeichnung zeigen:

Fig. 1 einen schematischen vertikalen Schnitt durch die Tauchpumpe nach der Erfindung,

Fig. 2 einen Schnitt nach der Linie A - B in Fig. 1 und

Fig. 3 einen vertikalen Teilschnitt.

Die Tauchpumpe 1 besitzt ein Gehäuse 2, z.B. aus Metall. Vorzugsweise besitzt es eine zylindrische Form. Um den Umfang verteilt weist die innere Gehäusewandung 3 nach außen offene, axiale Nuten 4 auf. Nach aufwärts münden diesen Nuten 4 in einen Gehäuseraum 5. Dieser setzt sich in einen Auslaß 6 fort, an den über den Gewindeanschlußstutzen 7 eine nicht dargestellte Pumpleitung anschließbar ist.

Das Gehäuse 2 umfaßt im Bereich der axialen Nuten 4 ein Abdeckrohr 8. Dieses schließt die Nuten 4 nach außen ab, so daß diese axiale Kanäle bilden.

Am unteren Ende des Gehäuses 2 ist ein Endteil 9 befestigt. Dieses bildet mehrere trompetenförmig zulaufende Einlaßkanäle 10. Die Einlaßkanäle 10 verlaufen von der ringförmigen seitlichen Einlaßöffnung 11 gekrümmt nach aufwärts zur Auslaßöffnung 12.

Das Endteil 9 nimmt eine Kupferbuchse 13 auf. Am oberen Ende des Gehäuses 3 ist eine gleichartige Buchse 14 befestigt. Jede Buchse 13, 14 trägt einen ringförmigen Permanentmagneten 15. In die Buchsen 13, 14 ragen die Enden 16, 17 der Rotorwelle 18. Zwischen diesen Enden und der Innenwandung 19 der Lagerbuchsen 13, 14 besteht ein erhebliches Spiel. Jedes Wellenende 16, 17 weist einen permanentmagnetischen Zylinder 20 auf. Die Magnetisierungsrichtung von ringförmigen Permanentmagneten 15 und Zylindern 20 ist axial und gleich gerichtet.

Die geringe Steifigkeit der radialen Zentrierung kann beim Durchfahren von kritischen Drehzahlen zu merklichen Querbewegungen des Rotors führen; daher sind in radialer Richtung überall am Rotor größere Spalte (0,5 mm) vorgesehen.

Zur Dämpfung solcher Querbewegungen, sowie von Präzession, Nutation und Rollbewegung sind im Feldbereich der Zentriersysteme 15 und 20 massive Kupferteile 21 befestigt. Beim Auftreten von Querbewegungen der Wellenenden 16, 17 ändert sich zeitlich der magnetische Fluß, der die Kupferteile 21 sowie die Buchsen 13, 14 durchsetzt. Dies führt zu Wirbelströmen im Kupfer und damit zur Dämpfung der Querbewegung.

Die reine Rotationsbewegung ist wegen der Rotationssymmetrie der Feldgeometrie weitgehend verlustfrei. Die Dämpfung von parasitären Bewegungsformen des Rotors wird besonders gut bei tiefen Temperaturen gewährleistet, da hier die Leitfähigkeit der Kupferbauteile beträchtlich höher ist als bei Raumtemperatur und daher die Wirbelströme stark zunehmen. Aber auch bei Raumtemperatur ist die Dämpfung für Drehzahlen bis 15000 U/min ausreichend.

Die Rotorwelle 18 trägt ein Schaufelrad 22, einen quermagnetisierten Permanentmagneten 23 für den Antriebsmotor 24, einen Ferritkern 25 für eine induktive Abtastvorrichtung 26. Das Schaufelrad 22 besitzt an seinem Umfangsbereich an Ober- und Unterseite plane Flächen 27, 28. Mit diesen arbeiten Topfmagnete 29, 30 zusammen, die überhalb bzw. unterhalb des Schaufelrades 22 angeordnet sind. Ihre Spulen 31, 32 bewirken die magnetische Anziehungskraft, die über die ebenen Polflächen 33, 34 auf die in geringem Abstand gegenüberliegenden planen Flächen 27, 28 des Schaufelrades 22 ausgeübt werden. Die ringförmigen Topfmagnete 29, 30 bilden mit ihren Außenseiten mit das Gehäuse 2. Sie sind in dieses einschiebbar.

Das Schaufelrad 22 ist aus ferromagnetischem Material. Bei Rotation des Schaufelrades, welches sonst von üblicher Konstruktion ist, tritt die zu fördernde Flüssigkeit durch die Einlaßkanäle 10 axial in das Schaufelrad ein und tritt radial aus diesem aus.

Das Schaufelrad 22 ist von einem feststehenden Leitrad 35 umgeben. Dieses Leitrad ist in das Abdeckrohr 8 eingesetzt. Die Gehäusewandung 3 ist dort frei von Axialnuten 4. Die Durchströmungskanäle 36 des Leitrades 35 sind nach aufwärts gekrümmt. Sie leiten die zu fördernde Flüssigkeit in der angegebenen Pfeilrichtung nach aufwärts.

Dem Permanentmagneten 23 des Antriebsmotors 24 zugeordnet ist die Wicklung 37. Sie ist zur Vermeidung von Wirbelstromverlusten im Gehäuse 3 mit einem Ferritring 38 umschlossen. Die Wicklung 37 selbst ist dicht vergossen und abgedichtet im Gehäuse 3 befestigt.

Der an der Rotorwelle 18 befestigte Ferritkern 25 der Abtastvorrichtung 26 ist von einem ebenfalls aus Ferrit bestehenden Topfkern 39 umgeben, der zwei Spulen 40, 41 enthält. Diese Spulen 40, 41 liegen in den Zweigen einer nicht dargestellten Brückenschaltung, die mit einer Trägerfrequenz von 30 kHz betrieben wird. Wenn der Ferritkern 25 symmetrisch zwischen den Spulen 40, 41 liegt, ist die Brücke abgeglichen und liefert kein Signal. Bei Abweichungen aus der Mittellage entsteht ein Signal, das anschließend phasenempfindlich gleichgerichtet, verstärkt und mit einem Differenzialanteil versehen den Spulen 31, 32 in geeigneter Weise zugeführt wird.

Die erreichbare Lagegenauigkeit des Schaufelrades 22 kommt dabei durchaus bereits in den Bereich der Fertigungstoleranzen für das Schaufelrad 22 selbst, nämlich einige $\mu$m, so daß Spalte von wenigen 0,01 mm realisiert werden können. Dadurch ergibt sich an dieser Stelle eine sehr gute Möglichkeit für die Abdichtung der zu fördernden Flüssigkeit zwischen Ein-und Austritt am Schaufelrad 22. Die Topfmagnete 29, 30 bilden zusammen mit dem Leitrad 35 eine kompakte Einheit mit relativ kurzen Bauteilen, so daß Probleme der Wärmedehnung bzw. Schrumpfung beim Durchfahren großer Temperaturbereiche vermieden werden.

Die Feldgeometrie am Laufrad ist rotationssymmetrisch, deshalb treten bei der Rotation keine merklichen Wirbelstromverluste auf. Die Anordnung der Abdichtspalte bei gleichem Radius an der Schaufelradober-und -unterseite bewirkt außerdem, daß ein Axialschub am Schaufelrad bei Förderung gegen Druck weitgehend kompensiert wird.

Da die beschriebene magnetische Lagerung vollkommen berührungsfrei arbeitet, ist die Tauchpumpe 1 besonders für unbegrenzten, wartungsfreien Dauerbetrieb geeignet.

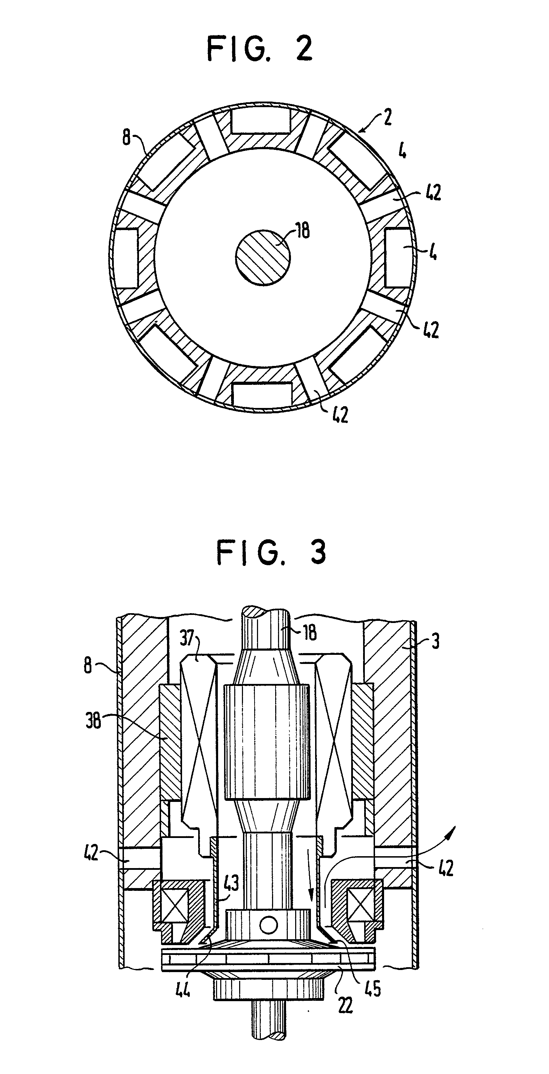

Tiefsiedende Flüssigkeiten stehen in der Regel mit ihrem Dampf im Gleichgewicht. Dies bringt es mit sich, daß überall, wo durch rasch bewegte Teile in der Flüssigkeit Reibung auftritt, Dampfblasen entstehen. Solche Anteile von Dampf in der zu fördernden Flüssigkeit mindern die Druckerzeugung im Schaufelrad und die Fördermenge an Flüssigkeit. Dampfblasen sollen daher nach Möglichkeit nicht in den Förderstrom gelangen. Das kann man durch Verwendung eines geschlossenen Schaufelrades 22 (mit Boden-und Deckscheibe) wie in Fig. 1 dargestellt und durch Anordnung von Löchern 42 erreichen, die an geeigneter Stelle angeordnet sind. Durch diese kann der am Rotor erzeugte Dampf zurück in die die Tauchpumpe 1 umgebende Flüssigkeit gelangen. Diese Löcher 42 durchdringen die Gehäusewandung 3 und das Abdeckrohr 8. Sie sind insbesondere aus Fig. 2 ersichtlich. Solche Löcher 42 sind überhalb des Schaufelrades 22 aber auch im Bereich unterhalb desselben vorgesehen. Diese durchdringen dort (in Fig. 1 nicht dargestellt) die Polschuhe des Topfmagneten 30. Sie leiten damit Dampfblasen ab, die im Raum unterhalb des Schaufelrades 22 entstehen. Durch die Löcher 42 für die Dampfrückführung kann auch der, durch die Laufradabdichtung von der Druckseite her, nach innen durchtretende Leckanteil in den Flüssigkeitsvorrat zurückströmen.

Wie aus Fig. 1 ersichtlich, ist das Gehäuse 3 mit Abtastvorrichtung 26 und radialer Lagerung nach oben hin dicht abgeschlossen. Die zunächst die Tauchpumpe 1 ganz füllende Flüssigkeit wird bei Ingangsetzen der Pumpe durch Reibungsarbeit des Rotors in der Flüssigkeit allmählich verdampft. Der entstehende Dampf verdrängt die Flüssigkeit aus dem Innenraum, so daß der Rotor schließlich zum großen Teil nurmehr in Dampf rotiert, was zu einer Verminderung der Reibungsverluste führt. Um diesen Effekt noch vollkommener zu machen, ist wie aus Fig. 3 ersichtlich, am unteren Ende der Motorwicklung 37 ein Rohrstück 43 mit Trichter 44 angesetzt. Der Trichterrand 45 reicht bis dicht an das Schaufelrad 22 heran. Hierdurch wird die Flüssigkeit bis zum Schaufelrad vom Rotor ferngehalten. Der Weg von Dampf bzw. Dampf-und Leckströmung ist durch Pfeile angedeutet.

Am Gehäuse 2 oben sind Anschlüsse 46 für die Zuleitungen zu der Abtastvorrichtung 26 der Motorwicklung 37 und den Topfmagneten 29, 30 vorgesehen. Die elektrischen Verbindungen im Innenraum sind nicht dargestellt.

Die dargestellte Tauchpumpe 1 hat für eine Förderleistung von etwa 500 Liter/Stunde bis 2000 Liter/Stunde einen Außendurchmesser von 50 mm und einen Schaufelraddurchmesser von 36 mm bei typischen Drehzahlen von 6000 bis 8000 U/min. Die Baugröße ist somit verhältnismäßig klein.

## Ansprüche

1. Tauchpumpe, insbesondere für tiefsiedende Flüssigkeiten, mit einer Lagerung für die das Schaufelrad einer Kreiselpumpe tragende Welle, dadurch gekennzeichnet, daß dem Schaufelrad (22) aus ferromagnetischem Material axial unterstützend wirkende, steuerbare Magnete (29, 30) zugeordnet sind.

2. Tauchpumpe nach Anspruch 1, dadurch gekennzeichnet, daß die steuerbaren Magnete Topfmagnete (29, 30) sind, die der Oberseite und Unterseite des Schaufelrades (22) zugeordnet sind.

3. Tauchpumpe nach Anspruch 2, dadurch gekennzeichnet, daß die ringförmigen Polflächen (33, 34) der Topfmagnete (29, 30) mit den planen Flächen (27, 28) des Schaufelrades (22) als Abdichtungen zusammenwirken.

4. Tauchpumpe nach den Ansprüchen 1 bis 3, dadurch gekennzeichnet, daß die Topfmagnete (29, 30) dem Umfang des Schaufelrades (22) zugeordnet sind.

5. Tauchpumpe nach den Ansprüchen 1 bis 4, dadurch gekennzeichnet, daß ein Schaufelrad (22) mit Deckscheiben mit planen Oberflächen an Ober- und Unterseite verwendet ist.

6. Tauchpumpe nach den Ansprüche 1 bis 5, dadurch gekennzeichnet, daß an die Austrittsöffnung des Schaufelrades (22) ein feststehendes Leitrad (35) anschließt, dessen Eintritt mit dem Austritt des Schaufelrades fluchtet und dessen Ausgang in axiale nach aufwärts verlaufende Kanäle (4) übergeht, die sich am oberen Ende in einer Austrittsleitung vereinen.

7. Tauchpumpe nach Anspruch 1, dadurch gekennzeichnet, daß mit der Pumpenwelle (18) eine induktive Abtastvorrichtung (26) zusammenwirkt, die die Speiseströme der steuerbaren Elektromagnete (29, 30) beeinflußt.

8. Tauchpumpe nach Anspruch 1, dadurch gekennzeichnet, daß mit den freien Enden der Rotorwelle (18) permanentmagnetische Tauch-Systeme (15, 20) zur radialen Zentrierung sowie Mittel (13, 14, 21) zur passiven Dämpfung von Querbewegungen, Präzession, Nutation und Rollbewegung durch Wirbelströme zusammenwirken.

9. Tauchpumpe nach einem oder mehreren der vorstehenden Ansprüche, dadurch gekennzeichnet, daß im Pumpengehäuse (2) radiale Löcher (42) vorgesehen sind, die abgeschlossene Räume oberhalb oder unterhalb des Schaufelrades (22) mit der Umgebung verbinden.

10. Tauchpumpe nach Anspruch 9, mit einem Elektromotor zum Antrieb der Pumpenwelle, dadurch gekennzeichnet, daß vom einen Ende der am Pumpengehäuse (3) dicht befestigten Motorwicklung (37) zum Schaufelrad (22) hin ein Trichter (43, 44) vorgesehen ist, dessen Trichterende bis dicht an das Schaufelrad heranreicht.

FIG. 1

# FIG. 2

# FIG. 3